Europäisches Patentamt

European Patent Office

Office européen des brevets

(19)

(11) Publication number: **0 056 720**

**A1**

(12) # EUROPEAN PATENT APPLICATION

(21) Application number: **82300231.6**

(22) Date of filing: **18.01.82**

(51) Int. Cl.³: **G 11 B 5/41**

(30) Priority: **16.01.81 GB 8101374**

(43) Date of publication of application:
**28.07.82 Bulletin 82/30**

(84) Designated Contracting States:
**AT BE CH DE FR IT LI LU NL SE**

(71) Applicant: **AUTOMATION FACILITIES LIMITED**
**Prospect House Crendon Street**
**High Wycombe Buckinghamshire, HP13 6NA(GB)**

(72) Inventor: **Kingsbury, Philip Charles Orlando**
**The Old Farm House Stoke Row**
**Henley-on-Thames Oxfordshire(GB)**

(74) Representative: **Abnett, Richard Charles et al,**
**REDDIE & GROSE 16 Theobalds Road**
**London WC1X 8PL(GB)**

(54) **Floppy disc drive head cleaner.**

(57) A floppy disc drive head is cleaned by using a cleaning disc (44) replaceably insertable into a disc jacket (10) through an open edge thereof. Only the disc needs to be discarded when soiled. The jacket is adaptable for single or double sided drives by means of a peelable label or cover strip (32) which covers the head window (30) on one side of the jacket.

FIG. 1

## FLOPPY DISC DRIVE HEAD CLEANER

This invention relates to a method of and apparatus for cleaning flexible disc, or "floppy" disc, drive drive heads.

As is well known in the computing and word processing and like arts, floppy discs are used as magnetic storage media. They comprise discs of a few inches diameter, typically about 8 inches (about 20 cm) or about 5¼ inches (about 13 cm) though other sizes have been proposed, formed of a magnetisable polyester based material which can be rotated at high speed and written into or read from by an appropriate magnetic head.

These discs are prone to malfunction if they become dirty or covered with dust, and for this reason it is vitally important that they are kept as clean as possible. For this purpose the disc is invariably sealed in a PVC jacket which has a central hole to receive a hub, by which it is rotated, and a peripheral aperture, usually in the shape of a radial slot, constituting a head window to permit the reading and writing head to have access to the disc. These discs can be designed for single-sided or double-sided read/write heads and the jackets therefore have a head window on one or both sides respectively, as appropriate. The assembly of a jacket and disc is known as a cartridge.

The reading and writing heads themselves pick up debris, in particular oxides from the surface of the rapidly rotating disc. For optimum efficiency, accuracy and life of the equipment it is important to clean the heads frequently with an appropriate cleaner.

It has been proposed, for the purposes of cleaning a floppy disc drive head, to use a disc formed of a lint-free absorbent material which is wetted over a substantial area of the disc with a solvent. In order to apply the solvent it has been found necessary to provide a relatively large aperture in the disc jacket which has its disadvantages. Furthermore, the disc has a limited life, but in view of the expense of the provision of the disc and jacket it is necessary to use each disc a substantial number of times. A record of the number of times the disc is used must be kept to avoid head damage by abrasion.

The known proposals cope with the possibility of one or two-sided operation by providing the head window in one side of the jacket with a knockout section. The tab which fills this window can, however, come free of its own accord and cause serious damage to the mechanism when operating at high speed.

This invention has as its object to improve on and in particular, to simplify the prior devices such as that described above.

The invention will be described by way of example with reference to the drawings, in which:-

Figure 1 shows a disc jacket embodying the invention;

Figure 2 illustrates the blank required to make the jacket shown in Figure 1; and

Figure 3 illustrates the manner in which a double-sided disc jacket is used for a single sided drive.

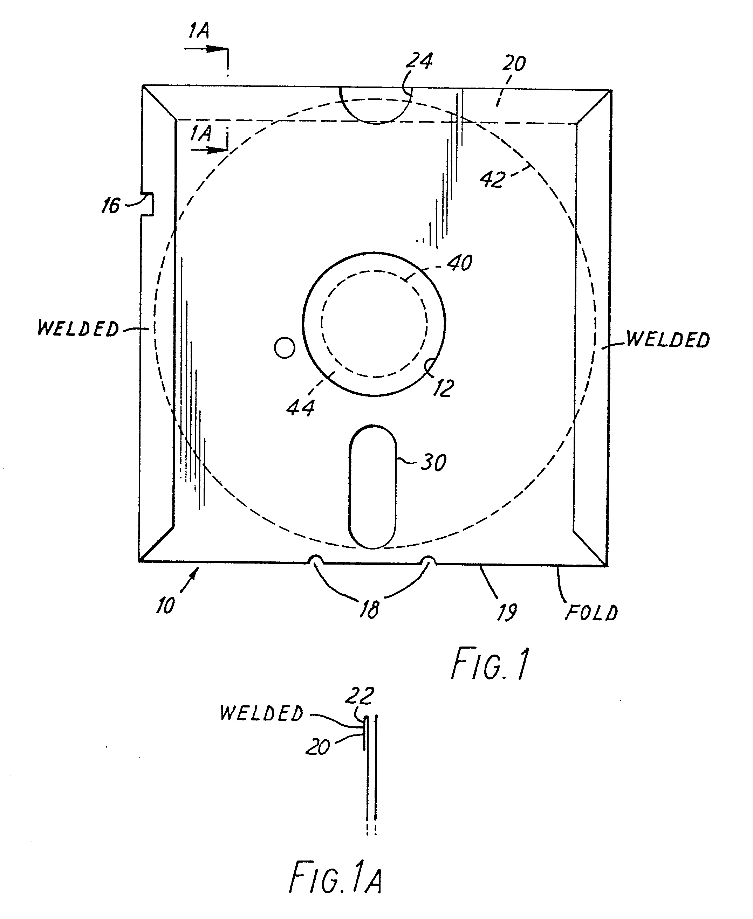

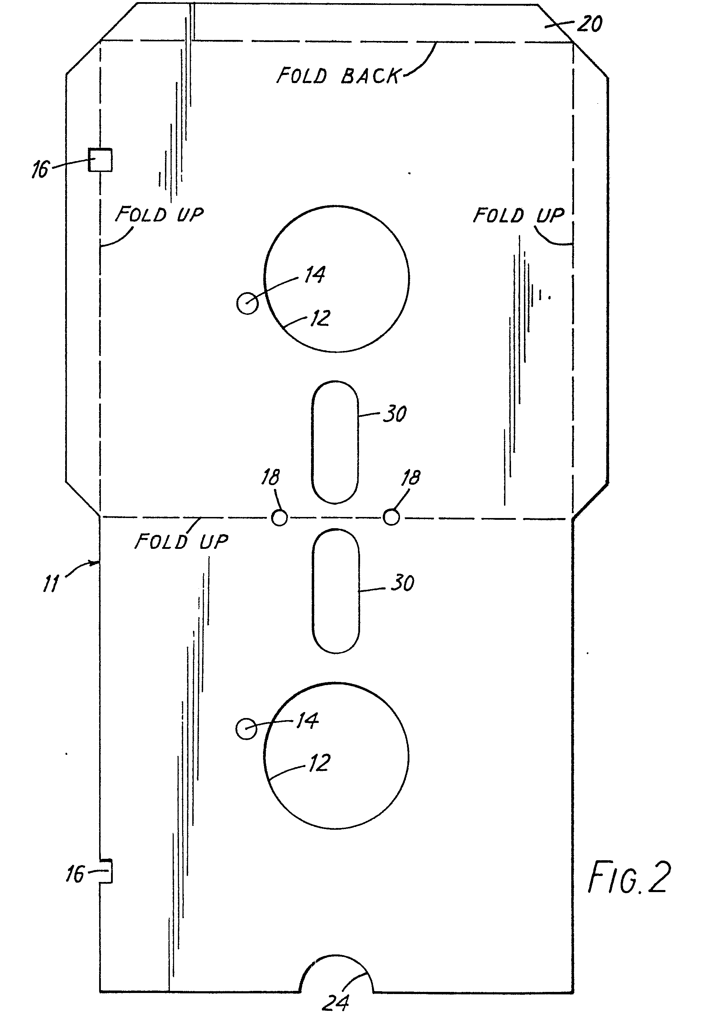

Referring to Figure 1, there is seen a disc holder or jacket 10 which is of generally square shape and is formed from a rectangular sheet 11 of PVC of the shape shown in Figure 2 appropriately folded and welded. As shown in Figure 1 there is a central hole or window 12 which receives the drive hub of the floppy disc drive, and a small index hole or window 14 for control purposes. A write control (or inhibit) notch 16 may be cut in a side edge of the jacket, and relief notches 18 can be provided in the reference edge 19. The jacket 10 is in normal use made into a sealed whole containing a magnetisable disc by folding over the three flanges and welding them so as completely to seal the jacket.

In the present instance however one (20) of these flanges is not folded over so as to seal on the opposed side of the disc but is folded back on itself, as shown in the detail 1A, so as to provide a stiffened edge 22 which is nevertheless not a sharp cutting edge. The opposed edge of the disc is slightly relieved at its central portion by means of a semi-circular cut-out 24, to facilitate access for thumb and fingers.

Thus, a circular cleaning disc can be inserted into the jacket through the one open side and can be removed therefrom by the user. The same jacket may thus be used for a large number of different cleaning discs, and it is not necessary to purchase a new jacket when the disc becomes dirty. Furthermore, the solvent can be applied directly to the whole, or part, of the disc surface before it is inserted without the need to have an access aperture cut in the jacket, which exposes the disc to the risk of external contamination.

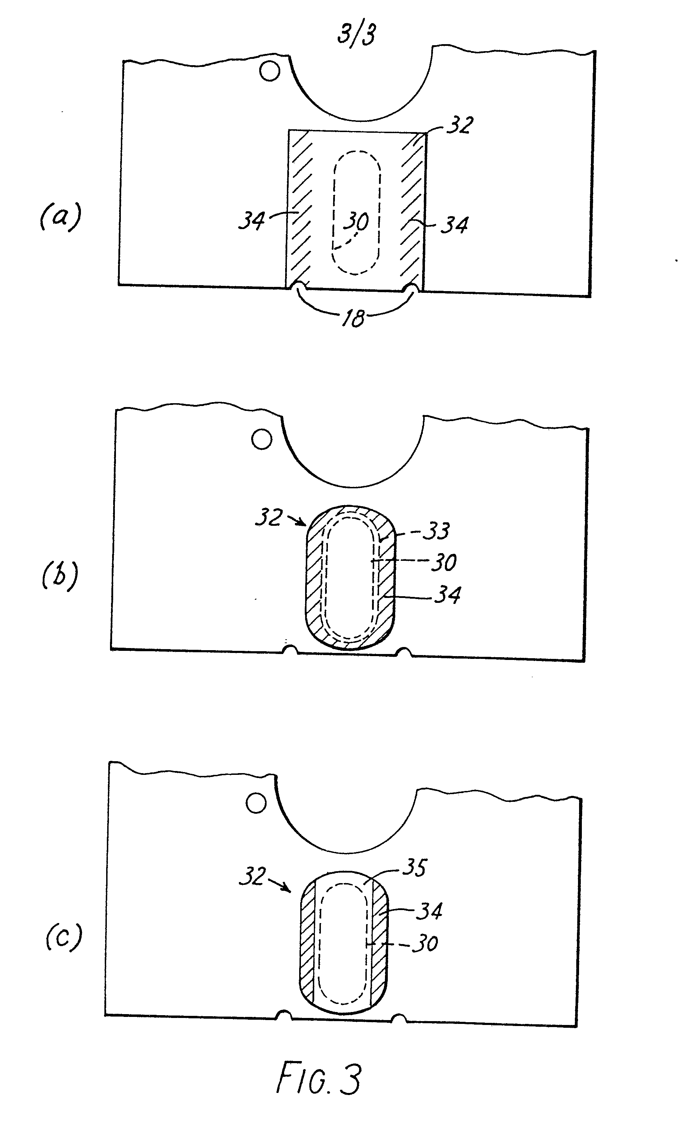

The jacket includes slots forming a head window 30 to allow the reading and writing head to have access to the disc. In the basic form of jacket there are slots through both the opposed sides of the jacket so that the disc can be used in a double-sided environment. However, it may be required only to use it in a single sided drive, and therefore, one of the two slots is covered by a suitable covering strip 32 (Figure 3) which carries adhesive 34 around the slot area but not within it, as shown by the shaded areas. This covering strip 32 can be peeled off if the device is to be used in a double-sided drive.

Three possible arrangements are shown at (a), (b) and (c) in Figure 3. As shown at (a), the covering strip 32 carries cut-outs corresponding to the notches 18 in the periphery of the jacket. The alternative shown at (b) has a slightly smaller covering strip or label 32 which carries adhesive 34 up to an inner limit 33 which is just larger than the head window 30 but surrounds the window. The modification shown at (c) has areas of adhesive 34 only along the long sides of the slots forming the head window 30, leaving the end portions 35 free of adhesive.

It may prove possible to use a film of another form of plastics or a paper strip. However, the use of a polyester covering strip has the advantage that if the cleaning disc is also polyester then there is less friction at the polyester - polyester interface between the cleaning disc and the label.

It will be appreciated that the label may be used in conjunction with a knock-out section filling the slot on one side of the jacket. That is to say a jacket having a knock-out section or cut-out section on one side at the position of the head window will also have a label applied over it. To convert to single-sided operation both the label and knock-out section are removed.

In manufacture the labels can be affixed by hand or by a suitable machine.

The cleaning disc, which is cut out into the same configuration as the normal floppy disc, may be formed of a Du Pont polyester material Reemay 2033. The inner periphery 40 and outer periphery 42 of the disc 44 are shown in dashed lines on Figure 1. A standard tape drive cleaning fluid may be used in the form of an aerosol or applied simply from a dropper bottle. The covering strip may be formed of "Mylar" polyester film. Typically the cleaning disc will be rotated in the drive for about 30 seconds to clean the head or heads.

Preferably the cleaning disc is thrown away on each occasion as it is a relatively inexpensive item. However, it will be appreciated that the cleaning disc can be retained for a number of uses and it is possible to inspect the whole disc very easily by removing it from the jacket. Thus the degree of contamination of the disc is readily apparent.

The jacket is adapted very easily from single to double sided use by the user simply by peeling off the label.

## CLAIMS

1.    A method of cleaning flexible disc drive drive heads, comprising inserting a cleaning disc into a jacket one edge of which remains at least substantially open, inserting the thus-formed cartridge into the disc drive, operating the disc drive to clean the drive head or heads, removing the cartridge from the disc drive, and removing the spent cleaning disc from the jacket.

2.    Apparatus for cleaning flexible disc drive drive heads, comprising a disc jacket one edge of which remains at least substantially open, and one or more cleaning discs removably and replaceably insertable into the jacket.

3.    A disc jacket for use in the method of claim 1, having one edge remaining at least substantially open.

4.    A plurality of cleaning discs for use in the method of claim 1, the discs being individually usable in a single jacket.

5.    Apparatus for cleaning flexible disc drive drive heads of one or two sided configuration selectively, comprising a disc jacket containing a cleaning disc, in which the jacket comprises a peelable cover over the head window position on one side of the jacket.

1/3

FIG. 1

FIG. 1A

FIG.2

FIG. 3

0056720

European Patent
Office

EUROPEAN SEARCH REPORT

Application number

EP 82 30 0231

| Category | Citation of document with indication, where appropriate, of relevant passages | Relevant to claim |
|---|---|---|
| X | US - A - 4 106 067 (MASUYAMA et al.)<br>* Column 6, lines 27-38; column 6, line 64 - column 7, line 25; figures 1,3-5,8 * | 1-4 |
| A | GB - A - 2 045 508 (DAVIS et al.)<br>* Page 2, lines 8-18, lines 88-126; page 3, lines 55-66; figures 1,2 * | 2 |
| A | US - A - 4 180 840 (ALLAN)<br>* Column 1, line 60 - column 2, line 26; column 3, lines 12-30; figures 2a,3a,3b * | 3 |
| A | DE - A - 2 638 478 (SUGISAKI et al.)<br>* Page 14, lines 13-32; page 15, line 19, to page 16, line 15; figures 1-6 * | 4 |
| A | IBM TECHNICAL DISCLOSURE BULLETIN vol. 20, no. 8, January 1978, New York (US)<br>G.R. KNUTSON et al.: "Abrasive diskette for lapping and cleaning magnetic recording heads" pages 3231-3232<br>* Whole document * | 2-5 |

## DOCUMENTS CONSIDERED TO BE RELEVANT

### CLASSIFICATION OF THE APPLICATION (Int. Cl. 3)

G 11 B 5/41

### TECHNICAL FIELDS SEARCHED (Int.Cl. 3)

G 11 B    5/41
          3/58
          23/50
          23/02

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 02-03-1982 | SANDRI |

EPO Form 1503.1    06.78